# EUROPEAN PATENT SPECIFICATION

(11) **EP 1 653 583 B1**
(45) Date of publication and mention of the grant of the patent: **24.10.2007**
(21) Application number: 04425818.4
(22) Date of filing: 02.11.2004
(51) Int. Cl.: H02G 3/06

(54) **Fitting for helical protection sheaths**
Verbindung für gewickelte Schutzhülle
Raccord pour gaines de protection hélicoidales

(43) Date of publication of application: 03.05.2006
(73) Proprietor: Bertoldo & C. Srl, 10078 Venaria Reale (Torino) (IT)
(72) Inventor: Bertoldo, Piero, c/o Bertoldo & C. Srl, 10078 Venaria Reale (Torino) (IT)
(74) Representative: Marchitelli, Mauro

(56) References cited:
- DE-U- 8 623 653
- JP-A- 63 310 314
- US-A1- 2004 154 817
- US-B1- 6 642 451

## Description

The present invention relates to a fitting for protection sheaths for electrical cables with helical outer surface.

Helical (or spiral) sheaths are used as flexible protection elements for electrical cables in civil or industrial electrical installations, machines or apparatuses of various kinds. To connect a helical sheath to a box or to a rigid tube, fittings are used which have a first junction section for connection to one end of the helical sheath and a second junction section for connection to a box or to a tube.

A known fitting comprises a junction body made of plastic material with a tubular portion able to establish a sealed contact with an inner surface of a helical sheath and a fastening device with an inner thread coaxial to the tubular portion and able to engage the helical groove of the outer surface of the sheath.

The main drawback of this known solution is that the engagement between the sheath and the fitting is irreversible. To separate the sheath from the fitting, it is necessary to cut the part of the sheath engaged with the fitting.

Document DE 86 23 653 U to Schuchardt discloses a cable connector having two facing clamp slots to engage grooves on a protecting cover of a cable. A clip holds the clamp slots of the connector in engagement with the grooves.

The object of the present invention is to provide a simple and economical fitting which allows to obtain a sealed connection with a spiral sheath, able to withstand traction stresses and which can be disassembled and reassembled in simple fashion and without using tools.

According to the present invention, said object is achieved by a fitting having the characteristics set out in claim 1. Features described in the preamble of claim 1 are generally disclosed in the aforementioned DE 86 23 653 U reference.

Advantageous embodiments of the present invention are set out in the dependent claims.

The characteristics and the advantages of the present invention shall become readily apparent in the detailed description that follows, provided purely by way of non limiting example, with reference to the accompanying drawings, in which:
- Figure 1 is a perspective view of a fitting according to the present invention before the insertion of a sheath,
- Figure 2 is a perspective view of the fitting of Figure 1 in an intermediate stage of assembly,
- Figure 3 is a perspective view of the fitting according to the invention once assembly is complete, and
- Figure 4 is a perspective view of a variant of the fitting according to the invention.

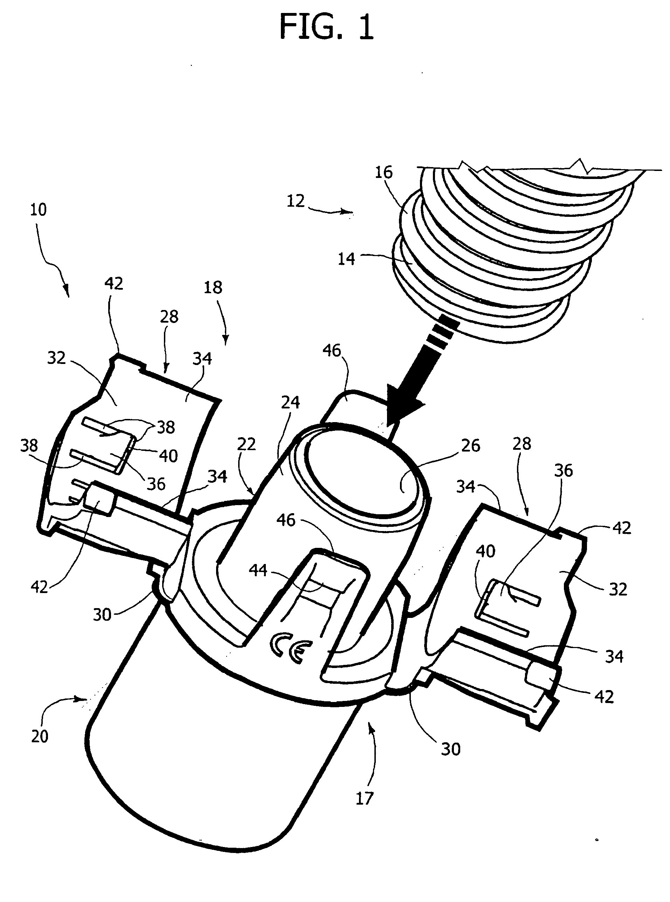

With reference to Figure 1, the number 10 designates a fitting according to the present invention. The fitting 10 is connected to an end of a protection sheath 12 for electrical cables. The fitting 10 was specifically designed for connection to a helical sheath 12. Helical sheaths (sometimes also known as spiralled sheaths) are available on the market with standardised dimensions. The outer surface of the sheath 12 substantially has the shape of a thread with a helical groove 14 and a helical rib 16 with constant pitch. The pitch of the sheath 12 is defined in a manner equivalent to the pitch of a thread, i.e. as the distance in the axial direction between the centres of two adjacent windings. The inner surface of the sheath 12 is substantially cylindrical, except for the presence of slight projections or depressions at the projecting and recessing areas of the outer surface. The inner surface of the sheath 12 has a nominal diameter equal to the diameter of a circumference that is tangential to the inner surface of the sheath. The sheaths 12 are standardised in terms of inner diameter, outer diameter (diameter of the ribs 16), pitch of the helical profile and depth of the grooves 14 (equivalent to the height of the ribs 16 in the radial direction).

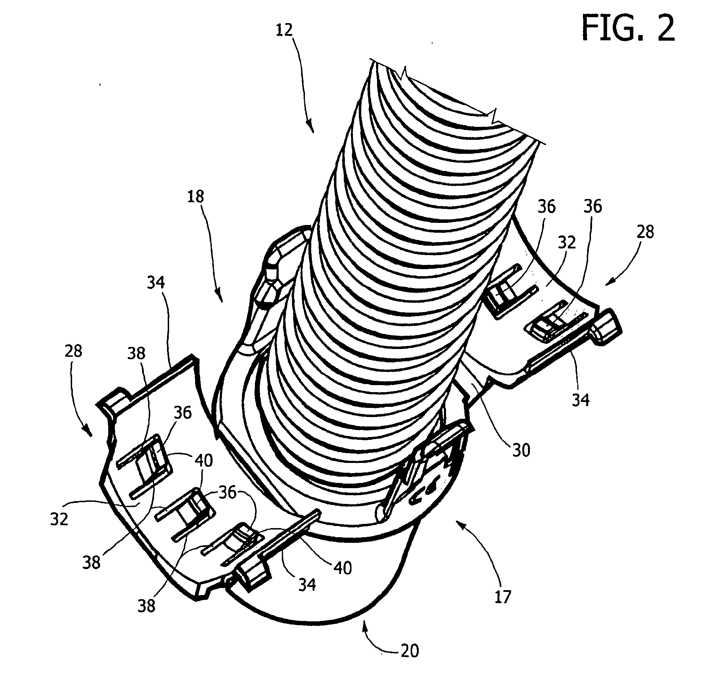

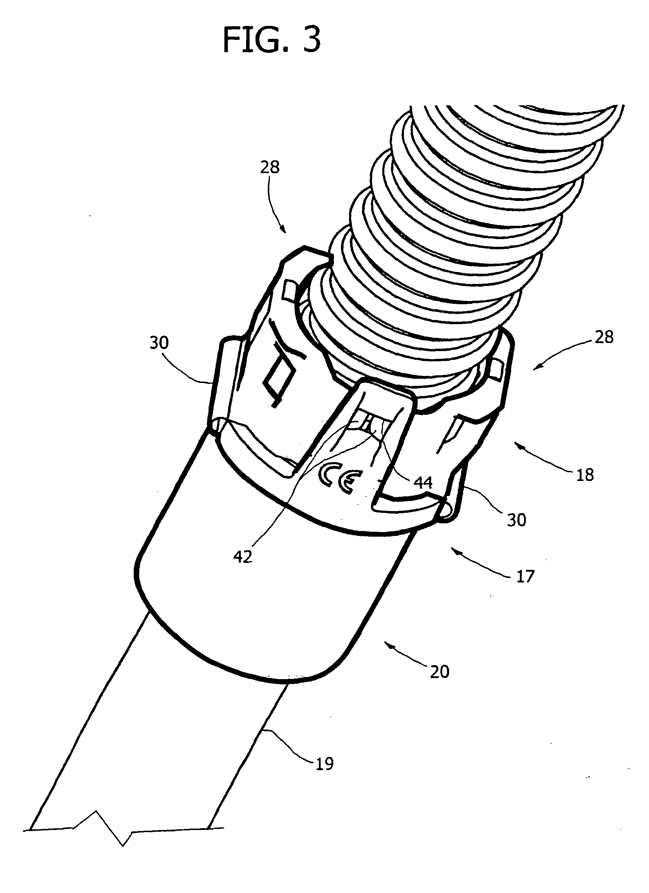

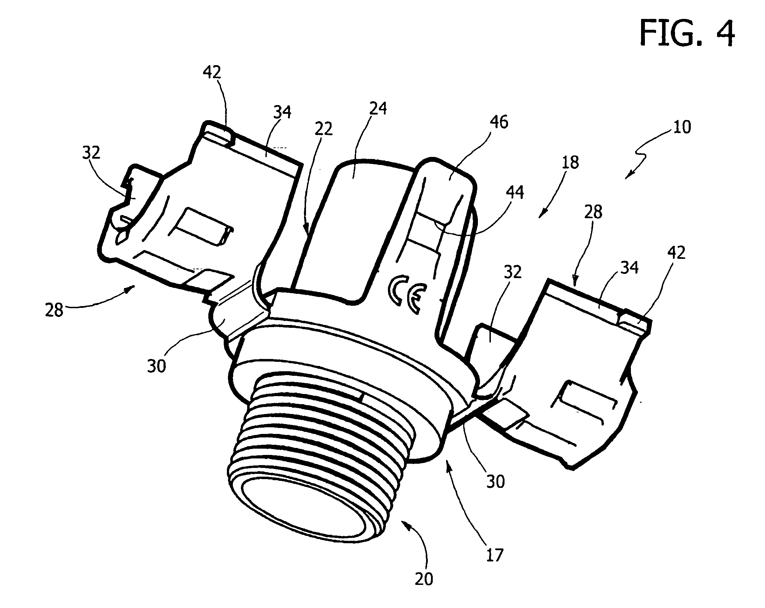

The fitting 10 has a first junction section 18 and a second junction section 20 formed in a single body 17 of injection moulded plastic material. The first junction section 18 establishes a connection with one end of a helical sheath 12. The second junction section 20 can be shaped to be coupled with a rigid tube 19 (Figure 3) or with a hole of a wall, e.g. of a connector block for electrical systems. The shape and dimensions of the second junction section 20 can vary according to the element whereto the junction 10 is to be connected. In the example illustrated in Figures 1-3, the second junction section 20 is to be connected to a rigid tube 19 and it has an inner seat (not shown) in which is housed a gasket which establishes a sealing contact with the outer surface of the tube. In the variant shown in Figure 4, the second union section 20 has a threaded outer surface for coupling with a threaded hole. In general, the second union section 20 may assume the shape of any union device able to establish a connection with any component of an electrical installation (protection tube, with smooth or corrugated outer wall, connector block, etc.).

The first union section 18 comprises a tubular portion 22 with a cylindrical outer surface having a diameter that is slightly greater than the nominal diameter of the inner surface of the sheath 12 in such a way that the sheath can be inserted on the tubular portion 12 establishing a slight interference between the outer surface of the tubular portion 22 and the inner surface of the sheath 12. The tubular portion 22 is preferably provided with a tapered end 24 which facilitates the insertion of the tubular portion 22 into the inner surface of the sheath 12. The tubular portion 22 has an inner hole 26 which communicates with a through hole of the second union section 20. The tubular portion 22 has the purpose of establishing a liquid-tight contact with the inner surface of the sheath 12.

The fitting 10 according to the present invention is provided with a fastening device which serves the purpose of providing the mechanical fastening between the body 17 and the sheath 12 independently from the tightness against liquids provided by the tubular element 22.

The fastening device comprises at least two fastening elements 28 each of which is connected to the body 17 of the fitting 10 by means of integral hinges 30 formed by elastically deformable thin portions of plastic material. The two fastening elements 28 are movable between a disengaged position shown in Figures 1, 2 and 4 and an engaged position shown in Figure 3. Each of the two fastening elements 28 has an inner surface 32 with semi-cylindrical shape and a diameter equal to or slightly greater than the outer diameter of the sheath 12. The two fastening elements 28 are provided with respective edges 34 which approach the corresponding edges of the other retaining element 28 in the engagement position. In the engaged position, the two semi-cylindrical surfaces 32 of the two fastening elements 28 form a cylindrical surface, coaxial to the tubular portion 22. In the fastened position, the cylindrical surfaces 32 of the two fastening elements 28 form around the outer surface of the tubular portion 22 an annular seat with a radial thickness that is equal to or slightly greater than the difference between the outer radius and the inner radius of the sheath 12.

Each of the fastening elements 28 is provided with a plurality of teeth 36 which project inwards relative to the surface 32. Around each tooth 36 are formed three through cuts 38 in such a way that each tooth 36 is elastically deformable relative to the fastening element 28. In particular, each tooth is able to assume an elastically deformed position in which the tooth is substantially aligned relative to the cylindrical surface 32.

The teeth 36 have respective retaining surfaces 40, radial relative to the axis of the respective semi-cylindrical surface 32. The retaining surfaces 40 of the teeth 36 are distanced from each other along a direction parallel to the longitudinal axis of the respective semi-cylindrical surface 32. The distance between the arresting surfaces 40 of the teeth 36 is determined in such a way that in the position of engagement with a sheath 12 (position of Figure 3) at least one of the retaining surfaces 40 is in contact with the radial surface of a rib 16. The teeth 36 which in the position of engagement are positioned at the head of a rib 16 deform elastically outwards.

In the example illustrated in the figures, each retaining element 38 is provided with three teeth 36 and the distance between the retaining surfaces 40 between two adjacent teeth 36 is smaller than the pitch of the helical sheath 12.

The fitting according to the present invention is provided with means to keep the two engagement elements 28 in the position of engagement shown in Figure 3. In the example illustrated in the figures, said means comprise snap-on engagement teeth 42 formed along the edges 34 of the retaining elements 28. In the position of engagement, the teeth 42 engage in snap-on fashion openings 44 formed in two engagement elements 46 which project in axial direction from the body 17. The engagement elements 46 are integrally formed with the body 17 and are elastically deformable to allow the insertion of the teeth 42 into the openings 44. The engagement elements 46 can be spread manually outwards to disengage the teeth 42 from the openings 44. When the teeth 42 are disengaged from the openings 44, the engagement elements 28 spontaneously move to an open position by effect of the elastic return of the hinges 30 towards the undeformed position.

As shown in Figure 1, the sheath 12 is inserted on the tubular element 22 when the engagement elements 28 are in their open position which is the position the elements 28 assume when the hinged are undeformed. After the insertion of the sheath on the tubular portion 22, the retaining elements 28 are moved towards their position of engagement by elastically deforming the hinges 30. The engagement elements 30 are held in the position of engagement by the snap-on engagement of the teeth 42 in the openings 44. As stated above, in the position of engagement with a sheath 12, at least one of the teeth 36 of the engagement elements 28 is inserted into a groove 14 of the sheath 12 in a position in which the engagement surface 40 of the tooth is in contact with the radial surface of a rib 16. This engagement of the teeth 36 with the sheath 12 forms a mechanical stop which prevents the extraction of the sheath 12 from the tubular portion 12. To remove the sheath 12 from the fitting 10, it is sufficient to spread the engagement elements 46 outwards. The engagement elements 28 open spontaneously and disengage the sheath 12. The sheath 12 can be removed from the tubular portion 12 applying a traction and a simultaneous rotation in the direction of winding of the helix.

## Claims

1. Fitting for protection sheaths (12) for electrical cables with an outer surface having a helical groove, comprising a mechanical retaining device (28, 36) able to engage a part of the outer surface of the sheath (12), the mechanical retaining device comprising at least two retaining elements (28) connected to the junction body (17) by means of deformable portions (30) and movable between a position of disengagement and a position of engagement, in which said retaining elements (28) each have an inner surface (32) with semi-cylindrical shape and are provided with a plurality of teeth (36) at least one of which in said position of engagement is inserted into a groove (14) of the outer surface of the sheath, engagement means (42, 44, 46) being provided to hold said retaining elements (28) in said position of engagement
**characterised in that** the fitting comprises a junction body (17) having a tubular portion (22) able to establish a sealing contact with an inner surface of a sheath (12), and that said teeth (36) are movable relative to the respective retaining element (28) and are capable of assuming an elastically deformed position in which the teeth do not project from the semi-cylindrical surface (32).

2. Fitting as claimed in claim 1, **characterised in that** each of said retaining elements (28) has the inner surface (32) with a diameter equal to or slightly greater than the outer diameter of the sheath (12).

3. Fitting as claimed in claim 2, **characterised in that** the teeth of each retaining element (28) project towards the interior of said semi-cylindrical surface (32).

4. Fitting as claimed in claim 1, **characterised in that** the teeth (36) of each retaining element (28) have respective arresting surfaces (40) distanced from each other in a direction parallel to the longitudinal axis of the semi-cylindrical surface (32).

5. Fitting as claimed in claim 2, **characterised in that** each of said retaining elements (28) is provided with two edges (34) which, in said position of engagement, are positioned adjacent to corresponding edges (34) of the other retaining element (28).

6. Fitting as claimed in claim 5, **characterised in that** in said position of engagement the semi-cylindrical surfaces (32) of the retaining elements (28) form a cylindrical surface coaxial to the tubular portion (22).

7. Fitting as claimed in claim 1, **characterised in that** each of said retaining elements (28) is provided with a pair of teeth (42) which engage in snap-on fashion corresponding openings (44) formed in engagement elements (46) which extend parallel to the tubular portion (22).

8. Fitting as claimed in claim 7, **characterised in that** said engagement elements (46) are elastically deformable to disengage said teeth (42).

## Patentansprüche

1. Fitting für Schutzhülsen (12) für elektrische Kabel mit einer eine schraubenförmige Nut aufweisenden Außenfläche, umfassend eine mechanische Halteeinrichtung (28, 36), die dazu geeignet ist, mit einem Teil der Außenfläche der Hülse (12) in Eingriff zu kommen, wobei die mechanische Halteeinrichtung wenigstens zwei Halteelemente (28) aufweist, die mit dem Verbindungskörper (17) mit Hilfe von deformierbaren Bereichen (30) verbunden und zwischen einer gelösten Position und einer Eingriffsposition bewegbar sind, wobei die Halteelemente (28) jeweils eine Innenfläche (32) mit halbzylindrischer Form aufweisen und mit mehreren Zähnen (36) versehen sind, von denen wenigstens einer in der Eingriffsposition in eine Nut (14) der Außenfläche der Hülse eingesetzt ist, und Eingriffsmittel (42, 44, 46), die vorgesehen sind, um die Halteelemente (28) in der Eingriffsposition zu halten,
**dadurch gekennzeichnet, dass** der Fitting eine Verbindungsklappe (17) mit einem rohrförmigen Bereich (22) aufweist, der dazu geeignet ist, einen Dichtkontakt mit einer Innenfläche einer Hülse (12) zu erzeugen, und dass die Zähne (36) relativ zu dem entsprechenden Halteelement (28) bewegbar und dazu geeignet sind, eine elastisch deformierte Position anzunehmen, in der die Zähne nicht von der halbzylindrischen Fläche (32) vorstehen.

2. Fitting nach Anspruch 1, **dadurch gekennzeichnet, dass** die Innenfläche (32) jedes der Halteelemente (28) einen Durchmesser aufweist, der gleich dem oder geringfügig größer als der Außendurchmesser der Hülse (12) ist.

3. Fitting nach Anspruch 2, **dadurch gekennzeichnet, dass** die Zähne jedes Halteelementes (28) in Richtung des Inneren der halbzylindrischen Fläche (32) vorstehen.

4. Fitting nach Anspruch 1, **dadurch gekennzeichnet, dass** die Zähne (36) jedes Halteelementes (28) entsprechende Blockierflächen (40) aufweisen, die voneinander in einer Richtung parallel zu der Längsachse der halbzylindrischen Fläche (32) beabstandet sind.

5. Fitting nach Anspruch 2, **dadurch gekennzeichnet, dass** jedes der Halteelemente (28) mit zwei Kanten (34) versehen ist, die in der Eingriffsposition benachbart zu den entsprechenden Kanten (34) des anderen Halteelementes (28) angeordnet sind.

6. Fitting nach Anspruch 5, **dadurch gekennzeichnet, dass** die halbzylindrischen Flächen (32) der Halteelemente (28) in der Eingriffsposition eine zylindrische Fläche bilden, die koaxial zu dem rohrförmigen Bereich (22) angeordnet ist.

7. Fitting nach Anspruch 1, **dadurch gekennzeichnet, dass** jedes der Halteelemente (28) mit einem Paar von Zähnen (42) versehen ist, die schnappend in entsprechende Öffnungen (44), die in den Eingriffselementen (46) ausgebildet sind, die sich parallel zu dem rohrförmigen Bereich (22) erstrecken, eingreifen.

8. Fitting nach Anspruch 7, **dadurch gekennzeichnet, dass** die Eingriffselemente (4) elastisch deformierbar sind, um aus dem Eingriff mit den Zähnen (42) zu kommen.

## Revendications

1. Pièce de fixation pour gaines de protection (12) pour des câbles électriques comprenant une surface externe présentant une rainure hélicoïdale, comprenant un dispositif de retenue mécanique (28, 36) capable de s'engager avec une partie de la surface externe de la gaine (12), le dispositif de retenue mécanique comprenant au moins deux éléments de retenue (28) reliés au corps de jonction (17) au moyen de portions déformables (30) et mobile entre une position de désengagement et une position d'engagement, dans laquelle lesdits éléments de retenue (28) ont chacun une surface interne (32) de forme semi-cylindrique et sont pourvus d'une pluralité de dents (36) dont au moins une dans ladite position d'engagement est insérée dans une nervure (14) de la surface externe de la gaine, des moyens d'engagement (42, 44, 46) étant prévus pour maintenir lesdits éléments de retenue (28) dans ladite position d'engagement
**caractérisée en ce que** la pièce de fixation comprend un corps de jonction (17) présentant une portion tubulaire (22) capable d'établir un contact étanche avec une surface interne d'une gaine (12), et **en ce que** lesdites dents (36) sont mobiles par rapport à l'élément de retenue (28) respectif et sont capables d'adopter une position élastiquement déformée dans laquelle les dents ne dépassent pas de la surface semi-cylindrique (32).

2. Pièce de fixation selon la revendication 1, **caractérisée en ce que** chacun desdits éléments de retenue (28) comporte une surface interne (32) d'un diamètre égal ou légèrement supérieur au diamètre externe de la gaine (12).

3. Pièce de fixation selon la revendication 2, **caractérisée en ce que** les dents de chaque élément de retenue (28) dépassent vers l'intérieur de ladite surface semi-cylindrique (32).

4. Pièce de fixation selon la revendication 1, **caractérisée en ce que** les dents (36) de chaque élément de retenue (28) ont des surfaces d'arrêt (40) respectives espacées les unes des autres dans une direction parallèle à l'axe longitudinal de la surface semi-cylindrique (32).

5. Pièce de fixation selon la revendication 2, **caractérisée en ce que** chacun des éléments de retenue (28) est pourvu de deux bords (34) qui, dans ladite position d'engagement, sont positionnés adjacents aux bords correspondants (34) de l'autre élément de retenue (28).

6. Pièce de fixation selon la revendication 5, **caractérisée en ce que** ladite position d'engagement de surface semi-cylindrique (32) des éléments de retenue (28) forment une surface cylindrique coaxiale à la portion tubulaire (22).

7. Pièce de fixation selon la revendication 1, **caractérisée en ce que** chacun desdits éléments de retenue (28) est pourvu d'une paire de dents (42) qui s'engagent de manière enclipsable dans des ouvertures (44) correspondantes formées dans des éléments d'engagement (46) qui s'étendent parallèlement à la portion tubulaire (22).

8. Pièce de fixation selon la revendication 7, **caractérisée en ce que** lesdits éléments d'engagement (46) sont élastiquement déformables pour se désengager desdites dents (42).
